# EUROPÄISCHE PATENTSCHRIFT

(11) **EP 2 695 009 B1**
(45) Veröffentlichungstag und Bekanntmachung des Hinweises auf die Patenterteilung: **13.05.2015**
(21) Anmeldenummer: 12727276.3
(22) Anmeldetag: 30.03.2012
(51) Int. Cl.: B60Q 3/00, F21V 8/00, F21S 8/10, B60Q 9/00, B60Q 3/04

(54) **LEUCHTVORRICHTUNG MIT 3D-WIRKUNG**
LIGHTING DEVICE HAVING A 3D EFFECT
ENSEMBLE D'ÉCLAIRAGE À EFFET TRIDIMENSIONNEL

(30) Priorität: 04.04.2011 DE 102011016000
(43) Veröffentlichungstag der Anmeldung: 12.02.2014
(73) Patentinhaber: Audi AG, 85045 Ingolstadt (DE)
(72) Erfinder: REUSCHEL, Jens Dietmar, 85053 Ingolstadt (DE); SCHMITZ, Christoph, 93326 Abensberg (DE)
(74) Vertreter: Thielmann, Frank
(86) Internationale Anmeldenummer: PCT/EP2012/001415
(87) Internationale Veröffentlichungsnummer: WO 2012/136334

(56) Entgegenhaltungen:
- EP-A1- 0 962 693
- EP-A1- 2 009 615
- WO-A1-2010/118795
- DE-A1- 10 032 927
- DE-A1- 19 822 636
- DE-A1-102004 054 732
- US-A- 1 930 359
- US-A- 4 974 354
- US-A1- 2009 219 734

## Beschreibung

Die vorliegende Erfindung betrifft eine Leuchtvorrichtung für ein Kraftfahrzeug mit einer Lichtquelle und mit mehreren flachen Lichtleitelementen, die zu einer Schichtanordnung geschichtet hintereinander angeordnet sind.

Kraftfahrzeuge besitzen zur Ausleuchtung des Innenraums in der Regel mehrere Leuchten beziehungsweise Leuchtvorrichtungen. Meist handelt es sich dabei um Lämpchen, die an- oder abgeschaltet werden können. Sie dienen in der Regel nicht dazu, zusätzlich Information zu transportieren, die der Fahrzeuginsasse optisch wahrnehmen könnte.

Außerdem besitzen moderne Fahrzeuge zahlreiche Assistenzsysteme. Zum einen soll der Fahrer beim Führen des Fahrzeugs unterstützt werden (z. B. Spurassistent, Überholwarner, Abstandswarner etc.) und zum anderen können auch Beifahrer gewarnt werden (z. B. Warnung vor einem vorbeifahrenden Fahrrad beim Aussteigen). Diese Assistenzsysteme liefern meist optische Hinweise beziehungsweise Warnungen. Daher ist es wichtig, diese optischen Hinweise und Warnungen an Stellen zu geben, die sich in der Blickrichtung des Insassen befinden.

Die EP 2 009 615 A1 beschreibt ein Anzeigegerät mit drei Lichtleitplatten, die hintereinander und in Dickenrichtung zueinander beabstandet angeordnet sind. Durch die Beabstandung soll ein räumlicher Darstellungseffekt besonders ausgeprägt sein. Außerdem wird die Möglichkeit erwähnt, eine Vielzahl von Lichtleitplatten dazu zu nutzen, eine Anzeige zu bereitzustellen, in der sich eine Figur bewegt.

Die DE 10 2004 054 732 A1 beschreibt eine Seitenblinkleuchte für einen Einbau in einen Außenspiegel eines Fahrzeugs. Die Seitenblinkleuchte umfasst einen plattenförmigen Lichtleiter und drei Lichtleitstäbe, in die Licht von Leuchtdioden eingespeist wird.

Die DE 198 22 636 A1 beschreibt eine Zierleiste, in die eine Leuchtvorrichtung integriert ist. Mittels elektrischen Ansteuerns von mindestens zwei nebeneinander angeordneten Türleuchten wird ein Lauflicht ausgebildet.

Die US 4,974,354 beschreibt eine Anzeigevorrichtung mit einer Vielzahl von beleuchtbaren Platten mit kegelförmigen Ausnehmungen. Die Platten sind in Dickenrichtung hintereinander und zueinander beabstandet angeordnet. Jede Platte kann mit einer eigenen elektrischen Leuchtquelle beleuchtet werden. Mittels Schaltern einer Steuerungseinheit ist die jeweils zu beleuchtende Platte auswählbar. Jede beleuchtbare Platte enthält eine andere Nachricht.

Die US 1,930,359 beschreibt zwei Lichtröhren zum wechselweisen Beleuchten von zwei hintereinander angeordneten Lichtleitplatten, um ein Objekt in zwei unterschiedlichen Stellungen darzustellen, damit der Eindruck erweckt wird, dass sich das Objekt bewegt.

Die EP 0 962 693 A1 beschreibt eine Anzeigevorrichtung mit zwei Platten und zwei Lichtquellen, die abwechselnd eingeschaltet werden, um in die beiden Platten wechselweise Licht einzustrahlen.

Die WO 2010/118795 A1 beschreibt ein Dekorelement, in welchem eine Folie mit einem Schriftzug bedruckt ist, der von einem Licht hinterleuchtet werden kann, das in eine transparente Kunststoffschicht eingekoppelt wird.

Die EP 100 32 927 A1 beschreibt eine Beleuchtungseinrichtung mit einem Leuchtmittel und einem Lichtleiter, der ein vergrößertes Übertragungsteil aufweist, in dessen Lichteinkoppelfäche Licht von einem Leuchtmittel eingekoppelt wird.

Die US 2009/0219734 A1 beschreibt zwei beabstandet angeordnete Lichtleitplatten.

Aus der Druckschrift DE 103 47 424 A1 ist eine transparente Scheibenanordnung als Element einer Tür, eines Fensters oder einer Wand bekannt. Sie besitzt eine oder mehrere Lichtquellen zum Einstrahlen beziehungsweise Einkoppeln von Licht in die Scheibenanordnung derart, dass sich das Licht im Inneren der Scheibenanordnung zwischen den äußeren Scheibenflächenseiten in Richtung entlang der Scheibenflächenseiten ausbreiten kann. Die Scheibenanordnung enthält Lichtablenkzonen, welche zumindest einen Teil des sie erreichenden Lichts in Richtung quer zu den Scheibenflächenseiten zum Austritt aus der Scheibenanordnung ablenken.

Darüber hinaus ist in der Druckschrift DE 10 2008 004 625 B4 eine mehrschichtige Kunststoffscheibe beschrieben. Sie besitzt zumindest einen teiltransparenten Träger, eine erste Schmelzklebefolie auf dem Träger und eine erste Polyesterfolie auf der ersten Schmelzklebefolie. Außerdem weist sie eine optisch wirksame Funktionsschicht, die mit der ersten Polyesterfolie verbunden ist, eine zweite Polyesterfolie, die mit der optisch wirksamen Funktionsschicht verbunden ist, und eine zweite Schmelzklebefolie auf der zweiten Polyesterfolie auf. Schließlich besitzt sie eine zumindest teiltransparente Deckschicht auf der zweiten Schmelzklebefolie.

Die Aufgabe der vorliegenden Erfindung besteht darin, eine Leuchtvorrichtung für ein Kraftfahrzeug bereitzustellen, mit der aussagekräftige Information an einen Fahrzeuginsassen optisch übermittelt werden kann. Erfindungsgemäß wird diese Aufgabe durch eine Leuchtvorrichtung nach Anspruch 1 gelöst.

In vorteilhafter Weise ist es durch die echte dreidimensionale Struktur der Leuchtvorrichtung möglich, einen dreidimensionalen optischen Eindruck zu generieren. Damit ist es aber auch möglich, dreidimensionale optische Erscheinungen für die Informationsübertragung zu nutzen. Im Gegensatz zu zweidimensionalen Anzeigen kann somit auch eine Tiefenwirkung genutzt werden, um entsprechende Nachrichten an den Fahrzeuginsassen zu übertragen.

In einer Ausführungsform können die Strukturelemente der Lichtleitelemente zumindest teilweise die gleiche geometrische Form besitzen. Damit entsteht eine Gruppe von Strukturelementen in den mehreren Lichtleitelementen, die gut für dreidimensionale Effekte genutzt werden können.

Weiterhin können die Lichtelemente im Wesentlichen die gleiche Größe besitzen. Dies hat Vorteile hinsichtlich der Fertigung und Montage. Es lässt sich dann ein Lichtmodul beziehungsweise eine Leuchtvorrichtung mit mehreren gleichgroßen Lichtelementen beispielsweise in einem einfachen Rahmen herstellen.

Beispielsweise können die Lichtleitelemente bandförmig ausgebildet sein. Diese Bandform hat den Vorteil, dass damit dreidimensionale Leuchtstreifen gebildet werden können, die erfindungsgemäß dreidimensionale Lichteffekte hervorrufen.

Gemäß einer weiteren Ausführungsform können alle Lichtleitelemente in gleicher Weise räumlich gekrümmt sein. Dies lässt sich beispielsweise mit den oben genannten dünnen, bandförmigen Lichtleitelementen gut realisieren. Die räumliche Krümmung hat den Vorteil, dass die Leuchtvorrichtung dann an vielen Stellen im Inneren des Kraftfahrzeugs raumsparend untergebracht werden kann. Beispielsweise lässt sie sich großflächig in eine Türverkleidung oder in den Himmel des Fahrzeugs integrieren.

Bei einer weiteren bevorzugten Ausführungsform ist an einer Kante jedes der Lichtleitelemente ein separater Lichtleiter angeordnet, mit dem Licht in die Kante des Lichtleitelements eingekoppelt wird. Damit lässt sich Licht über einen sehr langen Abschnitt des Lichtleitelements effizient einkoppeln. Die Lichtverteilung im Inneren des Lichtleitelements ist dann umso homogener.

Die Leuchtvorrichtung weist eine Steuereinrichtung zum Ansteuern der Beleuchtungseinrichtung auf, sodass die Lichtleitelemente mit der Beleuchtungseinrichtung zeitabhängig so beleuchtbar oder durchleuchtbar sind, dass die Strukturelemente mit einem Lauflichteffekt leuchten. Es werden also die einzelnen Strukturelemente der jeweiligen Lichtleitelemente zeitlich versetzt beleuchtet, und die Strukturelemente besitzen untereinander bezogen auf eine vorgegebene Blickrichtung einen örtlichen Versatz. Der zeitliche Versatz der Beleuchtung zusammen mit dem örtlichen Versatz der Strukturelemente führt dann zu einem Lauflichteffekt. Da die Strukturelemente hier dreidimensional angeordnet sind, ergibt sich folglich ein dreidimensionaler Lauflichteffekt.

Die Lichtleitelemente können weiterhin eine gemeinsame Oberflächennormale besitzen, und jedes der Strukturelemente kann in dem jeweiligen Lichtleitelement von der Oberflächennormalen einen anderen Abstand besitzen als ein anderes der Strukturelemente. D. h. in einer Blickrichtung (die mit der Oberflächennormalen korrespondiert) besitzt eine Gruppe von Strukturelementen, von denen jedes einem anderen Lichtleitelement zugeordnet ist, gegenüber den anderen Strukturelementen dieser Gruppe einen örtlichen Versatz.

Besonders vorteilhaft ist, wenn ein Assistenzsystem für ein Kraftfahrzeug mit einer oben geschilderten, erfindungsgemäßen Leuchtvorrichtung ausgestattet ist. Diese kann dann zum Erzeugen eines optischen Hinweises, insbesondere eines Warnhinweises verwendet werden. Es kann also ein Kraftfahrzeug mit einem solchen Assistenzsystem zur Unterstützung des Fahrers oder eines Beifahrers oder mit einer oben genannten Leuchtvorrichtung zum Beleuchten des Fahrzeuginnenraums ausgestattet sein.

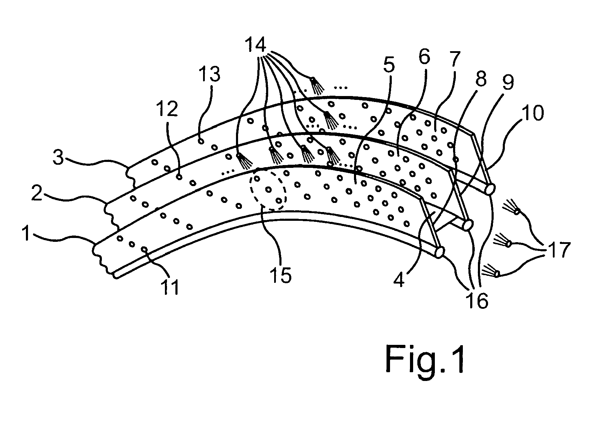

Die vorliegende Erfindung wird anhand der beigefügten Zeichnung näher erläutert, die ein Ausführungsbeispiel einer erfindungsgemäßen Leuchtvorrichtung wiedergibt.

Die nachfolgend näher geschilderten Ausführungsbeispiele stellen bevorzugte Ausführungsformen der vorliegenden Erfindung dar.

Ein Kraftfahrzeug weist beispielsweise eine Türverkleidung auf, in die ein Lichtmodul gemäß der symbolischen Darstellung der Figur integriert ist. Ein derartiges Lichtmodul kann aber auch beispielsweise als Lichtband in den Himmel eines Fahrzeugs oder quer im Cockpit unterhalb der Windschutzscheibe verbaut sein. Selbstverständlich sind auch andere Einbauorte für ein solches Lichtmodul im Fahrzeuginnern möglich. Mit dem Lichtmodul lässt sich ein dreidimensionaler Leuchteffekt erzielen. Dies kann allein für Beleuchtungszwecke oder auch für eine Informationsübertragung genutzt werden. Speziell können damit optische Hinweise und insbesondere Warnhinweise gegeben werden, wie dies unten näher erläutert wird.

In dem konkreten Beispiel weist die Leuchtvorrichtung drei bandartige Lichtleitelemente 1, 2 und 3 auf. Die Lichtleitelemente 1, 2, 3 sind parallel hintereinander angeordnet, sodass sich eine Schichtanordnung ergibt.

In dem vorliegenden Beispiel sind die einzelnen Lichtleitelemente 1, 2, 3 räumlich gekrümmt. Damit ergibt sich auch eine räumlich gekrümmte Schichtanordnung der Lichtleitelemente. Die räumliche Krümmung kann fest vorgegeben sein, sie kann aber auch nachträglich eingestellt werden, wenn das gesamte Lichtmodul beziehungsweise die Leuchtvorrichtung insgesamt entsprechend elastisch ist.

Die einzelnen Lichtleitelemente 1, 2, 3 besitzen untereinander einen Abstand, sodass sie sich nicht berühren. Dieser Abstand kann beispielsweise durch einen Abstandshalter 4 gewährleistet sein. Je größer der Abstand zwischen den Lichtleitelementen ist, desto stärker kann der erzielte räumliche Lichteffekt sein. Der Abstand zwischen den einzelnen Lichtleitelementen 1, 2, 3 muss nicht gleich sein.

In der Ausführungsform der Figur besitzt die Leuchtvorrichtung drei ähnlich gestaltete Lichtleitelemente 1, 2, 3. Sie kann aber auch mehr als drei solche Lichtleitelemente aufweisen, um den 3D-Effekt zu verbessern. Minimal kann die Leuchtvorrichtung auch zwei derartige Lichtleitelemente aufweisen.

Die Form der einzelnen Lichtleitelemente ist grundsätzlich frei wählbar. Wichtig ist nur, dass jedes Lichtleitelement im Wesentlichen flächig beispielsweise als Band oder Platte ausgebildet ist. Jedes Lichtleitelement 1, 2, 3 weist damit zwei Hauptseiten, nämlich eine Vorderseite und eine Rückseite auf, von denen in der Figur nur die Vorderseiten 5, 6, 7 zu erkennen sind. Die Ränder 8, 9, 10 sind entsprechend schmal. Die Lichtleitelemente 1, 2, 3 sind vorzugsweise platten-, band- oder folienförmig gestaltet.

Die einzelnen Lichtleitelemente 1, 2, 3 sind aus einem teiltransparenten Material (z. B. PMMA = Polymethylmethacrylat) gefertigt. Sie können also im Inneren zum Teil Licht durch Totalreflektion halten und weiterleiten.

An der Vorderseite 5, 6, 7, an der Rückseite oder im Inneren der Lichtleitelemente können sich optische Störstellen 11, 12, 13 befinden. Nur wenige dieser optischen Störstellen, die auch als Strukturelemente bezeichnet werden können, sind in dem Beispiel der Figur mit Bezugszeichen versehen.

Die optischen Störstellen 11, 12, 13, d. h. die Strukturelemente sind beispielsweise durch Fräsen, Lasern, Sandstrahlen oder dergleichen in das jeweilige Lichtleitelement 1, 2, 3 eingebracht. Sie können sich an der Oberfläche oder im Inneren des Lichtleitelements befinden.

Die Strukturelemente können jede gewünschte geometrische Form besitzen. So können sie beispielsweise Punkte sein, die in der Figur angedeutet sind. Es kann sich aber auch um spezielle Grafiken und Ornamente handeln. Beispielsweise sind es Pfeile, um eine Richtung anzudeuten.

Die Strukturelemente werden einzeln oder in Gruppen beleuchtet. Hierzu sind beispielsweise punktuelle Lichtquellen wie LEDs 14 vorgesehen. Jede dieser punktuellen Lichtquellen 14 beleuchtet hier eine Gruppe 15 von Strukturelementen.

Die Lichtleitelemente können gemäß dem Beispiel der Figur auch jeweils mit einem Lichtleiter 16 beleuchtet werden. Es ist hier an jedes Lichtleitelement 1, 2, 3 am Rand in Längsrichtung ein Lichtleiter 16 angebracht. Mithilfe von weiteren Lichtquellen 17 (z. B. LEDs) wird Licht in die Lichtleiter 16 eingekoppelt. Diese wiederum koppeln Licht entlang der gesamten Länge der jeweiligen Lichtleitelemente 1, 2, 3 in diese ein. Je nach Transparenz der Lichtleitelemente leuchten diese nun ganzflächig oder es leuchten im Wesentlichen nur die optischen Störstellen, d. h. die Strukturelemente 11, 12, 13. Bei Beleuchtung der Strukturelemente 11, 12, 13 mit den punktuellen Lichtquellen 14 leuchten immer nur die konkret angestrahlten Strukturelemente 11, 12, 13 oder Gruppen 15 von Strukturelementen. Dabei kann die Beleuchtung sowohl durch die Lichtquellen 14 als auch durch die Lichtquellen 17 weiß oder farbig (Farb-LED; RGB) sein.

Die Beleuchtungseinrichtung der Leuchtvorrichtung, die die verschiedenen Lichtquellen 14, 17 beinhaltet, kann mit einer speziellen Steuereinrichtung (in der Figur nicht dargestellt) gesteuert werden. Durch eine derartige Ansteuerung können die Schichten des dreidimensionalen Gebildes, d. h. die Lichtleitelemente 1, 2, 3 der Leuchtvorrichtung zeitabhängig durchleuchtet werden. Durch einen Versatz der Strukturelemente 11, 12, 13 in einer Raumrichtung ausgehend von einer vorgegebenen Betrachtungsachse und eine entsprechende zeitliche Ansteuerung (zeitlicher Versatz) kann eine dreidimensionale Animationswirkung erzeugt werden. Für solche Animationswirkungen können sowohl die Einzellichtquellen 14 als auch die beleuchteten Lichtleiter 16, die jeweils an den Längskanten der Schichten beziehungsweise Lichtleitelemente angebracht sind, verwendet werden. Insbesondere kann durch die Einzellichtquellen 14 ein lokales Lauflicht erzeugt werden, welches entweder nur in einer Schicht beziehungsweise einem Lichtleitelement läuft, oder auch in allen Schichten beziehungsweise Lichtleitelementen 1, 2, 3 laufen kann. Im letzteren Fall ergibt sich dann ein dreidimensionales Lauflicht.

In einem Beispiel kann eine derartige Leuchtvorrichtung in einem Fahrzeug als Linienlicht mit dreidimensionalem Lichteffekt oder auch als dreidimensionales Warnlicht eingesetzt werden. Wird eine solche Lichtvorrichtung beispielsweise als längliches Lichtmodul im Cockpit über die gesamte Breite des Fahrzeugs verbaut, kann es lediglich als Linienlicht mit 3D-Effekt in weiß genutzt werden, um eine entsprechende Tiefenwirkung zu erzielen. Mit lokaler Beleuchtung der einzelnen Strukturelemente kann es aber auch zur Warnung vor einer möglichen Kollision dienen (rotes Lauflicht).

Die Warnfunktion kann allgemein dadurch realisiert werden, dass eine Steuervorrichtung ein Signal überprüft. Erfüllt das Signal eine vorgegebene Bedingung, so steuert die Steuervorrichtung eine dafür vorgesehene Leuchtvorrichtung an. Die Leuchtvorrichtung besitzt den Aufbau, wie er oben geschildert wurde.

Warnfunktionen sind, wie oben bereits angedeutet wurde, insbesondere für Fahrerassistenzsysteme hilfreich. So kann die obige Leuchtvorrichtung beispielsweise für einen "Abstandswarner" eingesetzt werden. Der "Abstandswarner" kontrolliert ständig, ob ein bestimmter Abstand zum Vordermann eingehalten wird. Die Kontrolle erfolgt beispielsweise mittels Radar. Wird ein Mindestabstand unterschritten, so muss der Fahrer in geeigneter Weise gewarnt werden. Dies kann hier beispielsweise mittels der geschilderten Leuchtvorrichtung unterhalb der Windschutzscheibe, am Armaturenbrett oder dergleichen erfolgen.

Die erfindungsgemäße Leuchtvorrichtung kann auch für ein Fahrerassistenzsystem "Überholwarner" genutzt werden. Dabei tastet beispielsweise ein Radarstrahl den hinteren Bereich eines Kraftfahrzeugs ab. Wird ein überholendes Fahrzeug festgestellt und hat das eigene Fahrzeug den Blinker auf die Spur des überholenden Fahrzeugs gesetzt oder wird ein Lenkwinkel des eigenen Fahrzeugs in Richtung auf die Spur des überholenden Fahrzeugs registriert, so kann eine entsprechende Überholwarnung optisch abgegeben werden. Dies erfolgt beispielsweise dadurch, dass ein Lauflicht an der Innenseite der Tür an der Seite des überholenden Fahrzeugs einen Überholvorgang andeutet. Beispielsweise kann dies durch ein rotes Lauflicht erfolgen, das sich in Fahrtrichtung nach vorne bewegt.

Eine weitere Anwendungsmöglichkeit der erfindungsgemäßen Leuchtvorrichtung bei einem Assistenzsystem wäre der Einsatz bei einem "Ausstiegsassistenten". Hält das Fahrzeug beispielsweise neben einem Fahrradweg an, und ein Insasse will aussteigen, so kann mit einer entsprechenden Beleuchtung der Tür angezeigt werden, ob ein gefahrloses Öffnen der Tür möglich ist oder nicht. Wenn keine Gefahr besteht, so kann die Tür beispielsweise innen grün beleuchtet werden, während sie bei Gefahr, d. h. beispielsweise bei einem sich nähernden oder bei einem vorbeifahrenden Fahrrad, rot leuchtet.

Auch andere Fahrerassistenzsysteme können mit der erfindungsgemäßen Leuchtvorrichtung ausgestattet werden. Dabei kann die Leuchtvorrichtung in der Fläche sehr groß ausgebildet sein, da sie bei Nichtgebrauch ein hochwertiges Dekorelement darstellt.

## Patentansprüche

1. Leuchtvorrichtung für ein Kraftfahrzeug mit mehreren flachen Lichtleitelementen (1, 2, 3), die zu einer Schichtanordnung geschichtet hintereinander angeordnet sind; wobei sich die einzelnen Lichtleitelemente (1, 2, 3) nicht berühren und deutlich voneinander beabstandet sind; wobei jedes der Lichtleitelemente (1, 2, 3) lichtstreuende Strukturelemente (11, 12, 13) aufweist; wobei eine Beleuchtungseinrichtung (14, 17) optisch an jedes der Lichtleitelemente (1, 2, 3) gekoppelt ist, um Licht in die Lichtleitelemente (1, 2, 3) einzukoppeln; wobei mittels der Strukturelemente (11, 12, 13) Licht aus den Lichtleitelementen (1, 2, 3) auskoppelbar ist; wobei die Leuchtvorrichtung eine Steuereinrichtung zum Ansteuern der Beleuchtungseinrichtung (14, 17) aufweist; wobei die Beleuchtungseinrichtung (14, 15, 17) mehrere Einzellichtquellen (14) pro Lichtleiterlement (1, 2, 3) 15 aufweist,
**dadurch gekennzeichnet, dass**
bei Beleuchtung der Strukturelemente (11, 12, 13) mit den Einzellichtquellen (14) nur Strukturelemente (11, 12, 13) oder Gruppen (15) von Strukturelementen (11, 12, 13) leuchten, die der jeweiligen Einzellichtquelle (14) zugeordnet sind, wobei die Steuereinrichtung dazu vorbereitet ist, mittels des Ansteuerns der Beleuchtungseinrichtung (14, 17) ein zeitlich versetztes Beleuchten der einzelnen Strukturelemente (11, 12, 13) oder der einzelnen Gruppen (15) von Strukturelementen (11,12, 13) der jeweiligen Lichtleitelemente (1, 2, 3) durch die Einzellichtquellen (14) zu bewirken, um ein dreidimensionales Lauflicht zu erzeugen, das in allen Lichtleitelementen (1, 2, 3) läuft.

2. Leuchtvorrichtung nach Anspruch 1, wobei die Strukturelemente (11, 12, 13) der Lichtleitelemente (1, 2, 3) die gleiche geometrische Form besitzen.

3. Leuchtvorrichtung nach Anspruch 1 oder 2, wobei die Lichtleitelemente (1, 2, 3) im Wesentlichen die gleiche Größe besitzen.

4. Leuchtvorrichtung nach einem der vorhergehenden Ansprüche, wobei alle Lichtleitelemente (1, 2, 3) bandförmig ausgebildet sind.

5. Leuchtvorrichtung nach einem der vorhergehenden Ansprüche, wobei alle Lichtleitelemente (1, 2, 3) in gleicher Weise räumlich gekrümmt sind.

6. Leuchtvorrichtung nach einem der vorhergehenden Ansprüche, wobei an einer Kante jedes der Lichtleitelemente (1, 2, 3) ein separater Lichtleiter (16) angeordnet ist, mit dem Licht in die Kante des Lichtleitelements eingekoppelt wird.

7. Leuchtvorrichtung nach einem der vorhergehenden Ansprüche, wobei die Lichtleitelemente (1, 2, 3) eine gemeinsame Oberflächennormale besitzen, und jedes der Strukturelemente (11, 12, 13) in dem jeweiligen Lichtleitelement von der Oberflächennormalen einen anderen Abstand besitzt als ein anderes der Strukturelemente.

8. Assistenzsystem für ein Kraftfahrzeug mit einer Leuchtvorrichtung nach einem der vorhergehenden Ansprüche, wobei ein optischer Hinweis, insbesondere ein Warnhinweis mit der Leuchtvorrichtung erzeugbar ist.

9. Kraftfahrzeug mit einem Assistenzsystem nach Anspruch 8 oder einer Leuchtvorrichtung nach einem der Ansprüche 1 bis 7.

## Claims

1. Lighting device for a motor vehicle, comprising a plurality of flat light-conducting elements (1, 2, 3) arranged in layers one behind the other so as to form a layered arrangement, the individual light-conducting elements (1, 2, 3) not touching and being clearly spaced apart from one another, each of the light-conducting elements (1, 2, 3) comprising structural elements (11, 12, 13) which scatter light, an illumination apparatus (14, 17) being optically coupled to each of the light-conducting elements (1, 2, 3) in order to couple light into the light-conducting elements (1, 2, 3), it being possible to output light from the light-conducting elements (1, 2, 3) by means of the structural elements (11, 12, 13), the lighting device having a control apparatus for controlling the illumination apparatus (14, 17), the illumination apparatus (14, 17) comprising a plurality of individual light sources (14) for each light-conducting element (1, 2, 3), **characterised in that**,
when the structural elements (11, 12, 13) are illuminated by the individual light sources (14), only structural elements (11, 12, 13) or groups (15) of structural elements (11, 12, 13) which are assigned to the respective individual light source (14) light up, the control apparatus being set up such as to cause, by controlling the illumination apparatus (14, 17), the individual structural elements (11, 12, 13) or the individual groups (15) of structural elements (11, 12, 13) of the respective light-conducting elements (1, 2, 3) to be lit up in a time-staggered manner by means of the individual light sources (14) in order to produce a three-dimensional running light that extends across all of the light-conducting elements (1, 2, 3).

2. Lighting device according to claim 1, wherein the structural elements (11, 12, 13) of the light-conducting elements (1, 2, 3) have the same geometric shape.

3. Lighting device according to either claim 1 or claim 2, wherein the light-conducting elements (1, 2, 3) are substantially the same size.

4. Lighting device according to any of the preceding claims, wherein all of the light-conducting elements (1, 2, 3) are strip-shaped.

5. Lighting device according to any of the preceding claims, wherein all of the light-conducting elements (1, 2, 3) have the same three-dimensional curvature.

6. Lighting device according to any of the preceding claims, wherein a separate light conductor (16) is arranged on one edge of each of the light-conducting elements (1, 2, 3), by means of which conductor light is coupled into the edge of the light-conducting element.

7. Lighting device according to any of the preceding claims, wherein the light-conducting elements (1, 2, 3) have a common surface normal and each of the structural elements (11, 12, 13) in the respective light-conducting element is at a different distance from the surface normal than another of the structural elements.

8. Assistance system for a motor vehicle, comprising a lighting device according to any of the preceding claims, wherein an optical indication, in particular a warning, can be generated by the lighting device.

9. Motor vehicle comprising an assistance system according to claim 8 or a lighting device according to any of claims 1 to 7.

## Revendications

1. Dispositif lumineux pour un véhicule à moteur avec plusieurs éléments optiques plats (1, 2, 3), qui sont aménagés l'un derrière l'autre en formant un empilement de couches ; dans lequel les éléments optiques (1, 2, 3) ne se touchent pas et sont nettement distants l'un de l'autre ; dans lequel chacun des éléments optiques (1, 2, 3) présente des éléments structurels (11, 12, 13) dispersant la lumière ; dans lequel un dispositif d'éclairage (14, 17) est couplé optiquement à chacun des éléments optiques (1, 2, 3) pour injecter de la lumière dans les éléments optiques (1, 2, 3) ; dans lequel de la lumière issue des éléments optiques (1, 2, 3) peut être délivrée au moyen des éléments structurels (11, 12, 13) ; dans lequel le dispositif lumineux présente un dispositif de commande pour commander le dispositif d'éclairage (14, 17) ; dans lequel le dispositif d'éclairage (14, 17) présente plusieurs sources de lumière individuelles (14) par élément optique (1, 2, 3),
**caractérisé en ce que**,
lors de l'éclairage des éléments structurels (11, 12, 13) par les sources de lumière individuelles (14), seuls éclairent les éléments structurels (11, 12, 13) ou des groupes (15) d'éléments structurels (11, 12, 13) qui sont affectés à la source de lumière individuelle (14) respective, dans lequel le dispositif de commande est conçu pour induire, au moyen de la commande du dispositif d'éclairage (14, 17), un éclairage décalé dans le temps des éléments structurels individuels (11, 12, 13) ou des groupes individuels (15) d'éléments structurels (11, 12, 13) des éléments optiques respectifs (1, 2, 3) par les sources de lumière individuelles (14) afin de produire une lumière de service tridimensionnelle qui s'écoule dans tous les éléments optiques (1, 2, 3).

2. Dispositif lumineux selon la revendication 1, dans lequel les éléments structurels (11, 12, 13) des éléments optiques (1, 2, 3) possèdent la même forme géométrique.

3. Dispositif lumineux selon la revendication 1 ou la revendication 2, dans lequel les éléments optiques (1, 2, 3) possèdent sensiblement la même grandeur.

4. Dispositif lumineux selon l'une quelconque des revendications précédentes, dans lequel tous les éléments optiques (1, 2, 3) sont conformés en bandes.

5. Dispositif lumineux selon l'une quelconque des revendications précédentes, dans lequel tous les éléments optiques (1, 2, 3) sont spatialement incurvés de la même manière.

6. Dispositif lumineux selon l'une quelconque des revendications précédentes, dans lequel est aménagé sur une arête de chacun des éléments optiques (1, 2, 3) un guide d'ondes optiques séparé (16) avec lequel de la lumière est injectée dans l'arête de l'élément optique.

7. Dispositif lumineux selon l'une quelconque des revendications précédentes, dans lequel les éléments optiques (1, 2, 3) possèdent une normale de surface commune et chacun des éléments structurels (11, 12, 13) possède dans l'élément optique respectif une autre distance des normales de surface qu'un autre des éléments structurels.

8. Système d'assistance pour un véhicule automobile comprenant un dispositif lumineux selon l'une quelconque des revendications précédentes, dans lequel une indication optique, en particulier une indication d'avertissement peut être produite avec le dispositif lumineux.

9. Véhicule automobile équipé d'un système d'assistance selon la revendication 8 ou d'un dispositif lumineux selon l'une quelconque des revendications 1 à 7.
